Europäisches Patentamt

European Patent Office

Office européen des brevets

(19)

(11) Veröffentlichungsnummer: **0 360 075**
**A2**

(12) **EUROPÄISCHE PATENTANMELDUNG**

(21) Anmeldenummer: 89116494.9

(22) Anmeldetag: 07.09.89

(51) Int. Cl.5: **G11B 23/023 , G11B 33/04**

(30) Priorität: 20.09.88 DE 8811897 U

(43) Veröffentlichungstag der Anmeldung:
28.03.90 Patentblatt 90/13

(84) Benannte Vertragsstaaten:
AT DE FR GB

(71) Anmelder: **Agfa-Gevaert AG**

D-5090 Leverkusen 1(DE)

(72) Erfinder: **Thiele, Hartmut**
**Herterichstrasse 83**
**D-8000 Muenchen 71(DE)**

(54) Faltschachtel mit Fenster zur Aufnahme von Magnetbandcassetten.

(57) Beschrieben ist ein Magnetbandcassettenbehälter mit einer Kombination von Sichtfenster und einer
Tasche für Programmbeilagen, welche unverlierbar
mit dem Etui verbunden ist.

Dabei besitzen mindestens die Innen- und Außenlage einer Stirnwand sich überdeckende Aussparungen zur Bildung eines Fensterausschnittes, zwischen welchen sich eine transparente Folie (3) befindet, die über eine zu einer Längskante parallele
Faltlinie (2) geknickt oder doppelt gelegt und an drei
Kanten zwischen Innenlage (6) und Außenlage (4)
des Behälters eingeklebt ist. Außerdem weist die
Tasche (7) eine Einkerbung (10) durch beide Folienflächen als Griffmulde an ihrer offenen Seite (5) auf
(Figur 3).

FIG. 3

EP 0 360 075 A2

## Faltschachtel mit Fenster zur Aufnahme von Magnetbandcassetten

Die Neuerung bezieht sich auf eine Faltschachtel mit zur Aufnahme von Magnetbandcassetten, welche mit einem Sichtfenster aus Klarfolie ausgestattet ist und wobei das Sichtfenster als Tasche zur Aufnahme von Inhaltsverzeichnissen, Programmzeitschriften-Ausschnitten oder Ähnlichem für die Inhaltsangabe der Magnetbandcassette versehen ist.

Zur Aufnahme von Magnetbandcassetten gibt es auf dem Markt verschiedene Ausführungen von Behältern, beispielsweise Etui-Ausführungen mit Fenstern, wie in den DE-05 33 20 538 und 34 15 690 beschrieben. Ferner gibt es zahlreiche Etuis aus einer durchsichtigen Folie. Bei all diesen Formen kann man den Etui-Inhalt (zum Beispiel den Titel auf der Cassette) erkennen beziehungsweise durch spezielle Beilagen kenntlich machen.

Alle Lösungen haben jedoch den Nachteil, daß bei der Entnahme der Cassetten aus dem Etui diese Inhaltsangaben mit herausfallen. Beim Wiedereinstecken der Cassette in die Etuis können die Beilagen beschädigt werden oder sie verrutschen und können somit nicht mehr von außen gelesen werden. Aus dem DE-GM 83 20 274 ist bekannt, die Beilage mit der Inhaltsangabe an das Etui unverlierbar anzuschweißen. Diese Lösung hat wiederum den Nachteil, daß die Inhaltsangabe nicht ohne weiteres nachträglich beschriftet werden beziehungsweise herausgenommen werden kann. Es ist auch bekannt, daß handelsübliche Taschen auf das Etui aufgeklebt werden können, dies hat jedoch den Nachteil, daß der Benutzer diese Taschen besorgen und aufkleben muß. Außerdem können sich diese aufgeklebten Taschen wieder leicht lösen.

Da immer mehr Benutzer von Magnetbandcassetten die Inhaltsangaben für die bespielten Bänder aus den Programmzeitschriften ausschneiden, um damit ihre Cassetten zu kennzeichnen, hat eine Tasche im Etui bedeutende Vorteile.

Deswegen bestand die Aufgabe, für einen Magnetbandcassetten-Behälter eine Kombination von Sichtfenster und einer Tasche für Programmbeilagen zu finden, welche unverlierbar mit dem Etui verbunden ist.

Neuerungsgemäß wurde die Aufgabe gelöst mit einem Behälter mit der eingangs genannten gattungsmäßigen Art mit den im kennzeichnenden Teil des Anspruchs 1 aufgeführten Merkmalen. Weitere Einzelheiten der Erfindung gehen aus dem Unteranspruch und der Beschreibung hervor.

Die Neuerung wird nun anhand der Figuren näher beschrieben und zwar zeigt

Figur 1 einen Zuschnitt für einen neuerungsgemäßen Behälter mit Fensterfolie

Figur 2 Einzelheiten der aus einer Tasche bestehenden Fensterfolie mit einzusteckender Titelkarte

Figur 3 eine perspektivische Darstellung des neuerungsgemäßen Behälters.

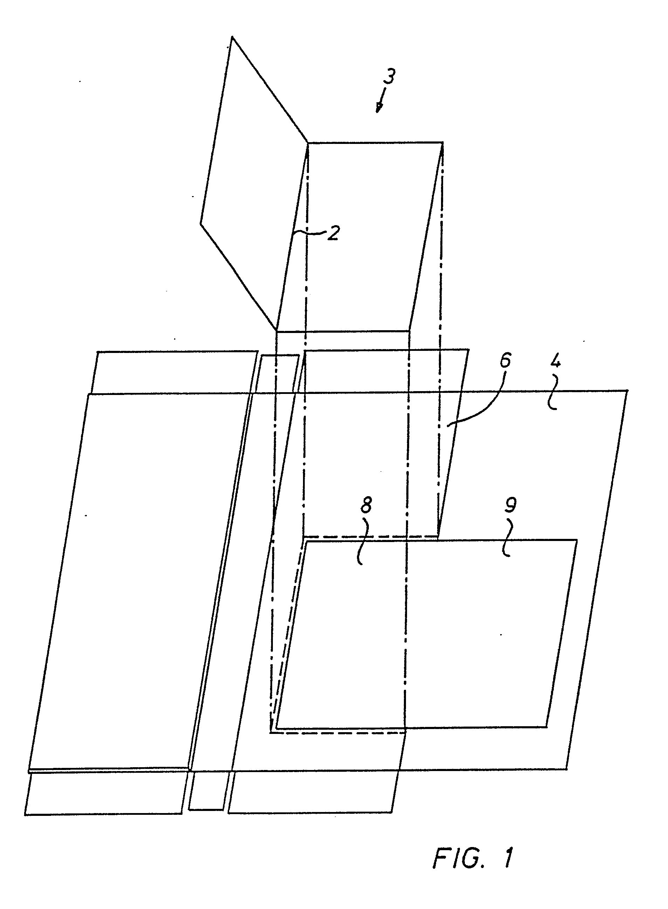

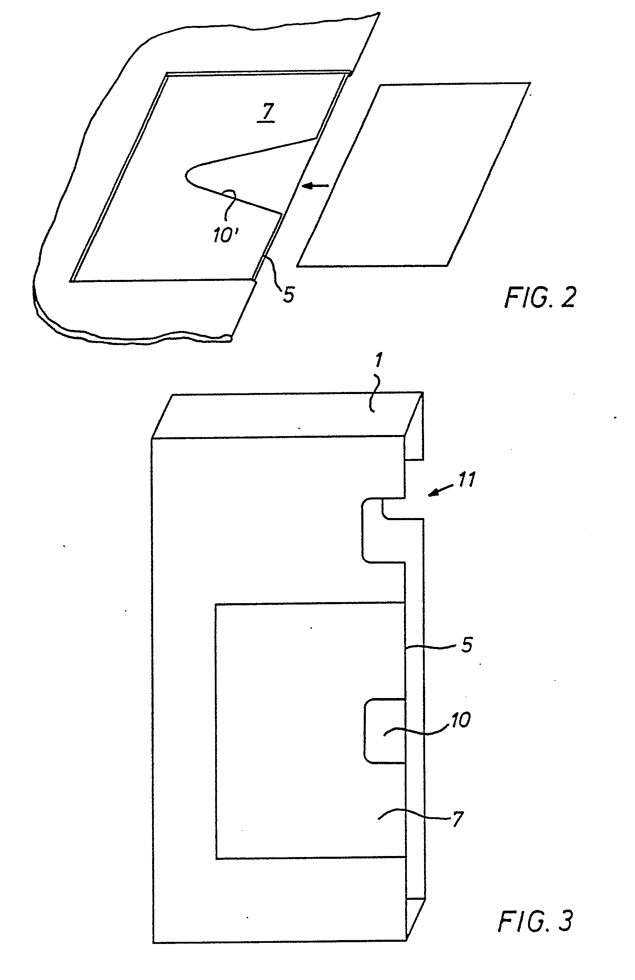

Figur 1 zeigt einen beispielsweise aus Karton bestehenden Zuschnitt für eine Faltschachtel, wie sie als Cassettenbehälter in der neuerungsgemäßen Ausführung vorgesehen ist. Der Zuschnitt ist mit Aussparungen (8, 9) versehen. Beim Auffalten des Zuschnitts wird die Außenlage (4) über die Innenlage (6) gefaltet und dazwischen wird die doppelwandige transparente über die Kante (2) gefaltete Folie (3) gelegt und vorzugsweise an drei Seiten eingeklebt. Die offene Seite der so entstandenen Tasche zeigt zum Außenrand der Faltschachtel, so daß an der Außenkante eine Öffnung (5) entsteht (Figur 2) Nach dem Verkleben des Fensters beziehungsweise der Tasche entsteht ein flachliegender Zuschnitt, welcher in üblicher Art aufgefaltet wird. Das fertige Etui (1) (Figur 3) kann mit verschiedenen Grifföffnungen versehen werden, beispielsweise mit einer Griffmulde (11) an der offenen Seite des Behälters zum Herausnehmen der Magnetbandcassette und mit einer Griffmulde (10) welche sich an der Öffnungsseite (5) des Fensters beziehungsweise der Tasche (7) befindet, um das Inhaltsverzeichnis bequem entnehmen zu können.

Damit auch kleinere Inhaltsverzeichnisse entnommen werden können, kann die Griffmulde auch wie in Figur 2 gezeigt ausgebildet sein.

Als Fenstermaterial für die Tasche können verschiedene durchsichtige Folien beispielsweise Kunststoff-Folien eingesetzt werden. Der Zuschnitt für die Faltschachtel beziehungsweise den Behältern kann aus Karton oder Kunststoff bestehen.

## Ansprüche

1. Einseitig offener, mit Fenster versehener Behälter aus Karton oder dergleichen zur Aufnahme einer Magnetbandcassette, bestehend aus zwei doppelwandigen Seiten- und Stirnwänden sowie einem Rücken, an dem zu beiden Seiten über Faltlinien je eine Außen- und Innenlage angelenkt ist zur Bildung der Seitenwände und an den Außen- und/oder Innenlagen Lappen zur Bildung der Stirnwände vorgesehen sind, und Außen- und Innenlagen sowie Rücken in einer Linie hintereinander liegen, wobei mindestens die Innen-und Außenlage einer Stirnwand sich überdeckende Aussparungen zur Bildung eines Fensterausschnittes aufweisen, zwischen welchen sich eine transparente Folie befindet, dadurch gekennzeichnet, daß die Folie (3) über eine zu einer Längskante parallele Faltlinie (2) geknickt oder doppelt gelegt und an drei Kanten zwischen Innenlage (6) und Außenlage (4) des Behälters eingeklebt ist, so daß eine Tasche (7) entsteht, deren Öffnung (5) zum Außenrand des Etuis (1) weist.

2. Faltschachtel nach Anspruch 1, dadurch gekennzeichnet, daß die Tasche (7) eine Einkerbung (10) durch beide Folienflächen als Griffmulde an ihrer offenen Seite (5) aufweist.

3. Faltschachtel nach Anspruch 1 und 2, dadurch gekennzeichnet, daß die Tasche (7) eine tiefere Einkerbung (10') nur durch eine der beiden Folienflächen als Griffmulde aufweist.

*FIG. 1*

A-G 5418

*FIG. 2*

*FIG. 3*